# EUROPÄISCHE PATENTANMELDUNG

(11) **EP 3 771 347 A1**
(43) Veröffentlichungstag der Anmeldung: **03.02.2021**
(21) Anmeldenummer: 19189501.0
(22) Anmeldetag: 31.07.2019
(51) Int. Cl.: A23L 21/10, A23L 27/00, A23L 29/231

(54) **FRUCHTPRODUKT**

(71) Anmelder: Döhler GmbH, 64295 Darmstadt (DE)
(72) Erfinder: Ahlers, Ann-Sophie, 60323 Frankfurt (DE); Alshawi, Tarek, 64285 Darmstadt (DE); Dr. Bonerz, Daniel, 64625 Bensheim (DE); Richter, Mike, 64295 Darmstadt (DE); Stieler, Jan, 60435 Frankfurt (DE)
(74) Vertreter: Tesch, Sabine

(57) **Zusammenfassung**

Als ein Fruchtprodukt mit viskositätsgebenden bis hin zu gelbildenden Eigenschaften, welches sich für den E-Nummern freien Einsatz (Clean Label) eignet, stellt die Erfindung ein Fruchtprodukt bereit, das im Wesentlichen alle wasserunlöslichen Bestandteile einer Frucht oder einer Mischung aus Früchten außer deren nicht-essbaren Bestandteilen, insbesondere außer Schalen, Kernen und Stielen, umfasst, wobei das Fruchtprodukt ein "Kohlenhydrat zu Ballaststoff"-Verhältnis im Bereich von 0,6 bis 4,7, bevorzugt im Bereich von 0,6 bis 3,5, besonders bevorzugt im Bereich von 0,6 bis 2,5 hat.

## Beschreibung

Die Erfindung betrifft ein Fruchtprodukt.

In Küche bzw. Haushalt als auch in der Lebensmittelindustrie werden traditionell Gelier- und Verdickungsmittel, sogenannte Hydrokolloide, zur Erzielung bestimmter Konsistenzen eingesetzt. Geliermittel quellen in Wasser oder binden Wasser und geben dadurch Produkten wie beispielsweise Suppen oder Saucen eine sämige bis sogar feste Konsistenz. Verdickungsmittel hingegen stabilisieren in Lebensmitteln bestimmte Konsistenzen oder Textur. Standardmäßig werden in der Lebensmittelindustrie zum Beispiel Johannisbrotkernmehl (E410), Pektine (E440), Guarkernmehl (E412), Carrageen (E407) oder Gellan (E418) eingesetzt. Dabei handelt es sich in der Regel um Lebensmittelzusatzstoffe. Das Gesundheitsbewusstsein der Verbraucher, ihre kritische Haltung zu Zusatzstoffen und die Möglichkeit für die Industrie, sich mit natürlich wirkenden Produkten vom Wettbewerb abzuheben, haben einen bereits lang anhaltenden Trend ausgelöst, Produkte mit "Clean Label" zu entwickeln. "Clean Label" bedeutet, dass auf den Lebensmitteln möglichst vertraute oder natürlich klingende Zutaten ausgewiesen werden sollen, nach Möglichkeit ohne Einsatz von Zusatzstoffen.

Ein Zusatzstoff mit langer Tradition ist Pektin, das aufgrund seiner vielfältigen Eigenschaften in zahlreichen Produkten im Haushalt und in der Lebensmittelindustrie Verwendung findet.

Kommerziell wird Pektin aus pflanzlichen Rohstoffen in einem mehrstufigen Prozess hergestellt. Dazu wird das getrocknete Ausgangsmaterial üblicherweise zunächst einer Heißextraktion mit verdünnter mineralischer Säure, z.B. Salzsäure oder Salpetersäure, unterworfen. Anschließend wird das Pektin nach Abfiltrieren der unlöslichen Bestandteile durch die Zugabe eines Alkohols, z.B. Ethanol oder Isopropanol, aus dem Filtrat ausgefällt, getrocknet und vermahlen.

Auch bei der Herstellung anderer Hydrokolloide ist es notwendig chemische Hilfsstoffe zu verwenden. So wird beispielsweise bei der Herstellung von Johannisbrotkernmehl Schwefelsäure zur Entfernung der Schale eingesetzt. Bei der Herstellung von Gellan wird unter anderem das Hydrokolloid durch eine alkoholische Fällung isoliert. Zur Herstellung von Carrageen werden Rotalgen (Rhodophyceen) zunächst neutral oder alkalisch, wässrig extrahiert. Im Anschluss wird dann das meiste in Lebensmitteln zum Einsatz kommende Carrageen aus dem flüssigen Extrakt durch Ausfällung mit Isopropanol gewonnen.

Nachteilig an derartigen bekannten Gelier- und Verdickungsprodukten und ihrer Herstellung sind die mit dem Einsatz mineralischer Säure und Lauge sowie des Alkohols eingesetzten Technologien zur Isolierung des Hydrokolloids, die sich negativ auf die Nachhaltigkeitsbilanz des Produktes auswirken. Zudem sind derartige herkömmliche Gelier- und Verdickungsprodukte nicht für Anwendungen geeignet, für die ausgelobt werden soll, dass keine Zusatzstoffe eingesetzt werden (sogenannte "Clean Label"-beziehungsweise "E-Nummern-freie" Anwendungen) und die vom Konsumenten verstärkt nachgefragt werden.

Bisherige Ansätze, die vorher genannten Nachteile der Hydrokolloide zu umgehen und somit ein E-Nummern-freie Deklaration zu erhalten sind beispielsweise die Verwendung von Fruchtpulvern oder Fruchtfasern.

Zur Herstellung von reinen Fruchtpulvern wird das Ausgangsmaterial üblicherweise gefriergetrocknet. Hierzu werden meist Fruchtstücke ohne weitere Zutaten bei sehr tiefen Temperaturen schockgefrostet und dann in einer Gefriertrocknungsanlage auf die gewünschte Trockenmasse getrocknet. Durch den Wasserentzug werden die Inhaltstoffe des Produktes um ein Vielfaches konzentriert. Die natürlicherweise in der Frucht vorhandenen Ballaststoffe sind somit ebenfalls im Fruchtpulver vorhanden.

Die Herstellung von Fruchtfasern erfolgt üblicherweise aus Äpfeln oder Citrusfrüchten. Hierfür werden die Früchte entsaftet ggf. entölt und getrocknet. Diese Ausgangsware wird nach spezieller Reinigung auf definierte Partikelgrößen vermahlen. Fruchtfasern werden meist aufgrund ihres sehr hohen Ballaststoffgehaltes als Ballaststoffzusatz in Lebensmittel eingebracht, auch werden sie als Füll- oder Bindestoffe eingesetzt. Meist besitzen sie noch ihr fruchteignes spezifisches Aroma.

Nachteilig in Bezug auf den Einsatz von Fruchtpulvern bzw. Fruchtfasern als natürliche texturgebende und gelierende Zutat ist der niedrige Gehalt an löslichen Ballaststoffen. Sofern als Rohmaterial ungeschälte Früchte eingesetzt werden, werden dort enthaltene Schadstoffe, wie beispielsweise Pestizidrückstände ebenfalls in dem Fruchtpulver konzentriert.

Es ergibt sich damit eine Aufgabe der Erfindung, ein Fruchtprodukt bereitzustellen, welches viskositätsgebende bis hin zu gelbildenden Eigenschaften besitzt und sich für den E-Nummern-freien Einsatz (Clean Label) eignet.

Die Erfindung löst diese Aufgaben in überraschend einfacher Weise mit einem Fruchtprodukt gemäß Anspruch 1.

Der Begriff "Frucht" wird hier entsprechend der Begriffsbestimmung in Anhang II der Richtlinie 2012/12/ EU des Europäischen Parlaments und des Rates vom 19. April 2012 zur Änderung der Richtlinie 2001/112/EG des Rates über Fruchtsäfte und bestimmte gleichartige Erzeugnisse für die menschliche Ernährung verwendet. Soweit nicht anders angegeben werden mit dem Begriff "Frucht" alle Früchte bezeichnet, einschließlich Früchte einjähriger Pflanzen wie Tomaten, die auch als Fruchtgemüse bezeichnet werden. Als "Obst" werden die in rohem Zustand essbaren Früchte mehrjähriger Bäume oder Sträucher bezeichnet. Als "Gemüse" werden alle einjährigen Pflanzen oder Teile von einjährigen Pflanzen bezeichnet, die roh oder verarbeitet der menschlichen Ernährung dienen. Soweit nicht anders angegeben, umfasst der Begriff "Gemüse" damit auch Früchte von einjährigen Pflanzen wie von Tomaten, die auch als "Fruchtgemüse" bezeichnet werden. Für die Erfindung können grundsätzlich alle Früchte verwendet werden, wobei eine Frucht oder eine Mischung aus zumindest zwei Früchten eingesetzt werden kann. Im Rahmen der Erfindung wird somit mit dem Begriff "Frucht" sowohl Obst als auch Gemüse bezeichnet.

Als Früchte besonders geeignet sind Kernobst, Steinobst, Beerenobst und/oder Gemüse. Beispiele besonders geeigneter Obstsorten sind für Kernobst Äpfel, Birnen und Quitten, für Steinobst Aprikosen, Pfirsiche, Kirschen, Pflaumen, und Nektarinen, für Beerenobst Brombeeren, Johannisbeeren, Blaubeeren, Preiselbeeren, sowie auch Zitrusfrüchte und Südfrüchte. Beispiele für besonders geeignete Südfrüchte sind Granatapfel, Ananas, Banane, Melonen, Kokosnuss, Passionsfrucht, Mango, Papaya, Litschi, und Kiwi Beispiele besonders geeigneter Gemüsesorten sind Karotte, Rote Beete, Pastinaken, Blumenkohl, Brokkoli, Zucchini, Tomate, Sellerie, Kohl, Gurke, Zwiebel und Aubergine.

Die Textur- und/oder Gelierfunktionalität liegt im erfindungsgemäßen Fruchtprodukt vor, ohne dass dazu Hilfsmittel, die in bekannten Verarbeitungsprozessen von Obst- und Gemüserohwaren zu isolierten Hydrokolloiden, z.B. Pektin, Gellan oder Johannisbrotkernmehl zwingend notwendig sind, wie etwa Laugen, Säuren oder Alkohole, zugesetzt werden. Alleine Schalen, Kerne und Stiele werden dem eingesetzten pflanzlichen Material entzogen.

Die Erfindung stellt ein Fruchtprodukt bereit, welches im Wesentlichen alle wasserunlöslichen Bestandteile einer Frucht oder einer Mischung aus Früchten außer deren nicht-essbaren Bestandteilen, insbesondere außer Schalen, Kernen und/oder Stielen, umfasst und ein "Kohlenhydrat zu Ballaststoff"-Verhältnis im Bereich von 0,6 bis 4,7, bevorzugt im Bereich von 0,6 bis 3,5, besonders bevorzugt im Bereich von 0,6 bis 2,5 hat.

Das erfindungsgemäße Fruchtprodukt hat dabei eine fruchttypische Gesamtzusammensetzung, beispielsweise mit den Komponenten Cellulose, Hemicellulose, Pektinen, organischen Säuren, Fruchtzuckern, sekundären Pflanzeninhaltsstoffen und/oder Mineralien.

Das "Kohlenhydrat zu Ballaststoff"-Verhältnis wird bestimmt als Gesamtgehalt an verdaulichen Kohlenhydraten (also Saccharose, Fructose, Glucose, Stärke und/oder Zuckeralkohole) geteilt durch den Gehalt an Gesamtballaststoffen nach der Methode AOAC 991.43.

In einer vorteilhaften Weiterbildung weist das erfindungsgemäße Fruchtprodukt ein Verhältnis von löslichen Ballaststoffen zu unlöslichen Ballaststoffen im Bereich von 0,15 bis 1,5, bevorzugt im Bereich von 0,25 bis 1,1, besonders bevorzugt im Bereich von 0,35 bis 1,0 auf. Der Gehalt an löslichen Ballaststoffen und der Gehalt an unlöslichen Ballaststoffen wird jeweils nach Methode AOAC 991.43 bestimmt.

Die folgende Übersicht gibt typische Werte für den Fruchtgehalt, Ballaststoffgehalt und den Gehalt an Kohlehydraten für herkömmliche Fruchtpulver und Fruchtfasern im Vergleich zum erfindungsgemäßen Fruchtprodukt an.

| | Fruchtpulver | Fruchtfaser | Fruchtprodukt |
|---|---|---|---|
| Fruchtgehalt | Ja | Nein | Ja |
| Ballaststoffgehalt | < 15 % | > 50 % | > 15 % < 50 % |
| Kohlenhydratgehalt | > 75 % | < 30 % | > 30 % bis 70 % |

Das erfindungsgemäße Fruchtprodukt besitzt somit eine Textur- und Gelierfunktionalität. Der Begriff Textur- und Gelierfunktionalität bedeutet, dass in Lebensmittelanwendungen eine Viskositätssteigerung bis hin zur Gelbildung bewirkt wird.

Das erfindungsgemäße Fruchtprodukt mit Textur- und Gelierfunktionalität bietet ein natürliches Texturierungs- und Gelierungssystem auf Obst- und Gemüsebasis. Im Wesentlichen alle ernährungsphysiologisch wertgebenden Fasern (also die Gesamtballaststoffe) des Ausgangsmaterials werden gemäß der Erfindung in dem Fruchtprodukt belassen. Im Rahmen der Erfindung wird vorzugsweise alleine die Schale der eingesetzten Frucht oder Früchte abgetrennt, und alles nach Abtrennung der Schale verbleibende faserhaltige, insbesondere ballaststoffhaltige Material ist im erfindungsgemäßen Fruchtprodukt enthalten.

Das Fruchtprodukt ist ein Fruchtfleisch-Produkt, das Textur- und Gelierfunktionalität aufweist, ohne dass aufwändige beziehungsweise nachteilige Extraktions- und/oder Abtrennprozesse durchgeführt werden müssen. Im Gegenteil, durch den Verzicht auf die Abtrennung (abgesehen von der Abtrennung der nicht-essbaren Bestandteile und Schalen) wird ein Fruchtgehalt beibehalten und durch die Erfindung ein texturierendes und gelierendes Lebensmittel geschaffen.

Durch die fruchttypische Gesamtkomposition (zum Beispiel mit Cellulose, Hemicellulose, organischen Säuren, Fruchtzuckern, sekundären Pflanzeninhaltsstoffen und/oder Mineralien) der erfindungsgemäßen Fruchtprodukte kann beispielsweise in Fruchtzubereitungen auf den Einsatz von Zusatzstoffen wie Zitronensäure und Natriumcitrat verzichtet werden. Die erfindungsgemäßen Fruchtprodukte sind also für den Einsatz in Clean-Label beziehungsweise E-Nummern-freien Applikationen besonders gut geeignet.

Bei dem Fruchtprodukt kann es sich in vorteilhafter Weise um ein, insbesondere getrocknetes, Apfelfruchtprodukt handeln, welche im Vergleich mit einem Apfelpulver hergestellt aus getrockneten ungeschälten Äpfeln bei gleicher eingesetzter Menge in einem Endprodukt zu einer um das 1,45-fache bis zu einer um das 4,6-fache erhöhten Viskosität des Endproduktes führt.

Die Angabe "gleiche eingesetzte Menge" bezieht sich dabei auf die gleiche Menge an Trockenmasse.

Die Viskosität des Endproduktes wird je nach zu erwartendem Fließverhalten des Endproduktes entweder mittels des Viskosimeters "Brookfield DV-II" mit Spindel S62 bei 50 Umdrehungen pro Minute bei 25°C oder mittels des Rheometers "Anton Paar MCR102" mit Messzylinder CC27 bei einer Scherrate von 30 pro Sekunde und 20 °C gemessen.

Ein erfindungsgemäßes, insbesondere getrocknetes, Apfelfruchtprodukt führt im Vergleich zu Apfelfasern hergestellt aus getrocknetem Apfeltrester bei gleicher eingesetzter Menge in einem Endprodukt in überraschender Weise zu einer um das 1,16-fache bis zu einer um das 6-fache erhöhten Viskosität des Endproduktes.

Des Weiteren ist das erfindungsgemäße , insbesondere getrocknete, Apfelfruchtprodukt in vorteilhafter Weise backstabil, was sich darin zeigt, dass eine Probe von 10 g eines das Apfelfruchtprodukt enthaltenden Endproduktes nach 8 Minuten Backen bei 200°C Ober-/Unterhitze in ihrer räumlichen Ausdehnung im Wesentlichen unverändert ist.

Die Erfindung stellt damit ein Fruchtprodukt bereit, das mit seinen texturgebenden Eigenschaften besonders gut geeignet ist zur Verwendung als texturgebende und/oder gelbildende Komponente eines Lebensmittels, welches insbesondere aus der Gruppe ausgewählt ist, die Fruchtzubereitungen, Fruchtaufstriche, Saucen, Getränke, Backwaren, Eiszubereitungen und Süßwaren umfasst.

Die Erfindung wird nachfolgend in Bezug auf die beigefügten Figuren und Ausführungsbeispiele näher erläutert.

Es zeigen:
- Figur 1: ein Fließschema eines ersten Verfahrens zur Herstellung von Fruchtsaft nach dem Stand der Technik,
- Figur 2: ein Fließschema eines zweiten Verfahrens zur Herstellung von Fruchtpüree, Fruchtpulpe und Fruchtsaft nach dem Stand der Technik,
- Figur 3: ein Fließschema des erfindungsgemäßen Verfahrens zum Herstellen eines erfindungsgemäßen Fruchtproduktes mit Textur- und Gelierungsfunktionalität,
- Figur 4: eine fotographische Aufnahme zur Illustration der Festigkeit einer BBQ-Sauce als Endprodukt unter Einsatz eines erfindungsgemäßen Fruchtproduktes in Form von Apfelfruchtpulver im Vergleich zu Endprodukten, die unter Einsatz einer Referenz beziehungsweise von Apfelpulver oder Apfelfasern hergestellt wurden und
- Figur 5: eine fotografische Dokumentation zur Backstabilität einer "Erdbeerfruchtzubereitung 2" als Endprodukt unter Einsatz eines erfindungsgemäßen Fruchtproduktes in Form von Apfelfruchtpulver im Vergleich zu Endprodukten, die unter Einsatz einer Referenz beziehungsweise von Apfelpulver oder Apfelfasern hergestellt wurden.

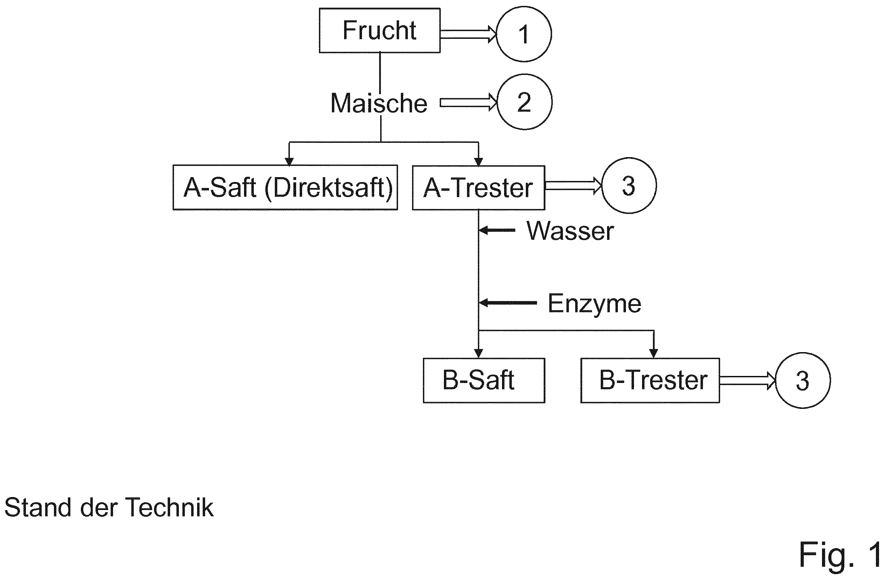

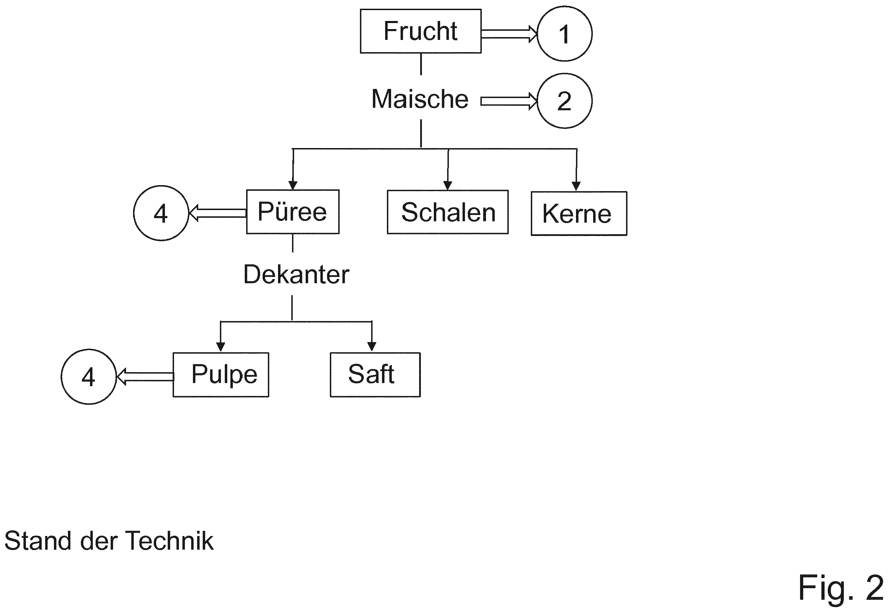

Die Figuren 1 und 2 zeigen übliche Verfahren zur Herstellung von Fruchtsaft, Püree und Pulpe. Mit den Ziffern 1, 2, 3 und 4 sind darin die Stellen beziehungsweise die Produkte gekennzeichnet, die als Ausgangsmaterial für das erfindungsgemäße Fruchtprodukt dienen können.

Bei der Saftherstellung gemäß Figur 1 wird aus Früchten insbesondere durch Zerkleinern eine Maische hergestellt, aus der Direktsaft, der sogenannte A-Saft, abgepresst wird, wobei der A-Trester zurückbleibt. Um die Saftausbeute zu erhöhen kann der A-Trester mit Wasser und Enzymen versetzt werden. Bei der Gewinnung des sogenannten B-Saftes aus diesem Ansatz bleibt der B-Trester zurück. Sowohl die ganze Frucht als auch die Maische, der A-Trester und der B-Trester können als Ausgangsmaterial für das erfindungsgemäße Fruchtprodukt eingesetzt werden. Dies gilt auch für in analoger Weise zum B-Saft und B-Trester erzeugten weiteren Saftkomponenten und zugehörigen Trestern.

Bei der Produktion von Fruchtprodukten gemäß Figur 2 wird aus Früchten insbesondere durch Zerkleinern eine Maische hergestellt. Durch Passieren wird aus der Maische ein Püree erhalten, und dazu aus der Frucht die Schalen, Kerne und Stiele abgetrennt. Das Püree kann, beispielsweise in einem Dekanter, in Pulpe und Saft aufgetrennt werden. Sowohl die ganze Frucht als auch die Maische, das Püree und die Pulpe können als Ausgangsmaterial für das erfindungsgemäße Fruchtprodukt eingesetzt werden.

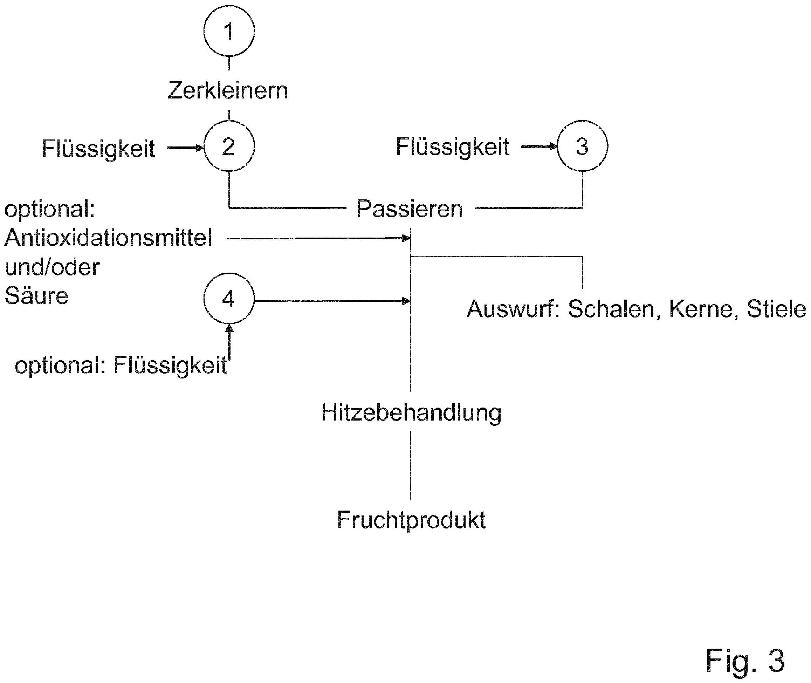

Figur 3 zeigt ein Fließschema eines Verfahrens zum Herstellen eines erfindungsgemäßen Fruchtproduktes mit Textur- und Gelierfunktionalität. Das Verfahren setzt grundsätzlich zerkleinertes Fruchtmaterial in fließbeziehungsweise pumpfähigen Zustand ein, wie etwa Püree 4 oder Pulpe 4. Diese Masse aus Früchten und/oder zerkleinerten Früchten ohne deren Schalen, Kerne und Stiele wird einer Hitzebehandlung unterzogen und dabei so lange bei einer für das Ausgangsmaterial geeigneten Temperatur gehalten, dass sich die gewünschte Textur- und/oder Gelierfunktionalität einstellt.

Das erfindungsgemäße Fruchtprodukt kann sowohl nass, als auch getrocknet vorliegen und eingesetzt werden.

In den vier nachfolgend beschriebenen Ausführungsbeispielen wird immer eine Referenz mit drei unterschiedlichen apfelbasierten Pulvern verglichen. Die apfelbasierten Pulver werden innerhalb einer Beispielrezepturart jeweils in gleicher Menge eingesetzt. In der Referenz wird diese Pulvermenge durch Zucker bzw. Rübensirup ersetzt. Das erfindungsgemäße Produkt ist das Apfelfruchtpulver.

Apfelpulver wird hergestellt aus getrockneten, ungeschälten oder geschälten Äpfeln. Apfelfasern werden hergestellt aus getrocknetem Apfeltrester und besitzen üblicherweise einen Ballaststoffgehalt von > 50 %.

Apfelpulver besitzen üblicherweise ein "Kohlenhydrat zu Ballaststoff"-Verhältnis (Berechnet über Gehalt an verdaulichen Kohlenhydraten (also Saccharose, Fructose, Glucose, Stärke und/oder Zuckeralkohole) geteilt durch den Gehalt an Ballaststoffen) von größer 5,0, Apfelfasern besitzen üblicherweise ein "Kohlenhydrat zu Ballaststoff"-Verhältnis von 0,0 bis 0,6.

Das erfindungsgemäße Fruchtprodukt besitzt üblicherweise ein "Kohlenhydrat zu Ballaststoff"-Verhältnis von mindestens 0,6 bis höchstens 4,7.

Die folgende Tabelle 1 gibt die Zusammensetzung der drei untersuchten apfelbasierten Pulver in Gew.-% an.

| | Apfelpulver | Apfelfaser | Apfelfruchtpulver |
|---|---|---|---|
| Fett | 0,95 | 0,5 | 0,4 |
| Kohlenhydrate | 81,5 | 23 | 37,7 |
| Protein | 1,3 | 3 | 3,3 |
| Ballaststoffe | 12 | 60 | 34,3 |
| Salz | 0,02 | 0,01 | 0,05 |
| Kohlenhydrate: Ballaststoffe | 6,8 | 0,38 | 1,1 |

Für die Viskositätsmessungen wurden folgende Methoden eingesetzt.

### Viskositätsmessung

für "Erdbeerfruchtaufstrich", "Erdbeerfruchtzubereitung 1" und "Erdbeerfruchtzubereitung 2"
1. Einfüllen von 330 mL Probe in ein 400 mL Becherglas.
2. Temperieren des Becherglases inkl. Probe auf 20 °C in einem Temperierbad.
3. Messen der Viskosität der Probe mittels Brookfield DV-II Viskosimeter mit Spindel S62 bei 50 Umdrehungen pro Minute; Der Messwert wird nach 60 Sekunden Drehdauer der Spindel abgelesen.

### Viskositätsmessung für "BBQ Sauce"

1. Einfüllen von 15 mL Probe in den Becher CC27/SS/AIR (Anton Paar).
2. Temperieren des Bechers inkl. Probe durch die Temperiereinrichtung des Rheometers Anton Paar MCR102 auf 20°C.
3. Messer der Viskosität der Probe mit Messzylinder CC27 bei einer Scherrate von 30 1/s.

### Ausführungsbeispiel "Erdbeerfruchtaufstrich"

Die Rezeptur des Erdbeerfruchtaufstrichs mit der Variation zwischen Zucker (Referenz), Apfelpulver, Apfelfaser und erfindungsgemäßem Apfelfruchtpulver ist in der folgenden Tabelle 2 wiedergegeben. Alle Angaben sind in g (Gramm).

| | Referenz | Apfelpulver | Apfelfaser | Apfelfruchtpulver |
|---|---|---|---|---|
| Erdbeerpüree (7,65 °Bx.; 0,9 % Säure) | 700 | 700 | 700 | 700 |
| Traubensaft-Konzentrat (65,0 °Bx.; 0,05 % Säure) | 266 | 266 | 266 | 266 |
| Erdbeersaft-Konzentrat (66,3 °Bx.; 6,5 % Säure) | 9 | 9 | 9 | 9 |
| Zitronensaft-Konzentrat (58,0 °Bx.; 39,2 % Säure) | 2 | 2 | 2 | 2 |
| Zucker, kristallin | 185,6 | 144,1 | 144,1 | 144,1 |
| Apfelpulver | 0 | 41,5 | 0 | 0 |
| Apfelfaser | 0 | 0 | 41,5 | 0 |
| Apfelfruchtpulver | 0 | 0 | 0 | 41,5 |

Die Herstellung des Referenz-Erdbeerfruchtaufstrichs hat folgende Schritte:
- Mischen von 20 % des Erdbeerpürees und 75 % des Traubensaftkonzentrats mit 25 % des Zuckers
- Erhitzen auf 95°C
- Hinzugabe des restlichen Erdbeerpürees, des restlichen Traubensaftkonzentrats und des restlichen Zuckers
- Eindampfen auf Zielbrix (43° Brix)
- Hinzugabe des gesamten Zitronensaft- und Erdbeersaftkonzentrats
- Abfüllen der Fruchtzubereitung

Die Herstellung der Erdbeerfruchtaufstriche mit den Apfelbasierten Pulvern hat folgende Schritte:
- Mischen von 20 % des Erdbeerpürees und 75 % des Traubensaftkonzentrats mit der Gesamtmenge an Pulver
- Erhitzen auf 95 °C
- Hinzugabe des restlichen Erdbeerpürees, des restlichen Traubensaftkonzentrats und des gesamten Zuckers
- Eindampfen auf Zielbrix (43 °Bx.)
- Hinzugabe des gesamten Zitronensaft- und Erdbeersaftkonzentrats
- Abfüllen der Fruchtzubereitung

Die Ergebnisse der Viskositätsmessungen sind in der folgenden Tabelle 3 wiedergegeben.

| | Referenz | Apfelpulver | Apfelfaser | Apfelfruchtpulver |
|---|---|---|---|---|
| Viskosität in mPas | 1626 | 4155 | 4810 | 8875 |

Die Viskosität des Erdbeerfruchtaufstrichs mit dem erfindungsgemäßen Apfelfruchtpulver ist damit 2,lfach höher als die Viskosität, welche durch Zusatz des Apfelpulvers erzielt wurde, und 1,9fach höher als die Viskosität, welche durch Zusatz der Apfelfasern erzielt wurde.

### Ausführungsbeispiel "BBQ-Sauce"

Die Rezeptur des Erdbeerfruchtaufstrichs mit der Variation zwischen Rübensirup (Referenz), Apfelpulver, Apfelfaser und erfindungsgemäßem Apfelfruchtpulver ist in der folgenden Tabelle 4 wiedergegeben. Alle Angaben sind in g (Gramm).

| | Referenz | Apfelpulver | Apfelfaser | Apfelfruchtpulver |
|---|---|---|---|---|
| Paprikapüree (7,6 °Bx.; 0,3 % Säure) | 40,40 | 40,40 | 40,40 | 40,40 |
| Zwiebelwürfel, frisch | 17,40 | 17,40 | 17,40 | 17,40 |
| Rübensirup (82 °Bx.) | 18,50 | 14,80 | 14,80 | 14,80 |
| Apfelpüree (12,6 °Bx.; 0,4 % Säure) | 2,50 | 2,50 | 2,50 | 2,50 |
| Essig (5 % Säure) | 11,30 | 11,30 | 11,30 | 11,30 |
| Salz | 2,10 | 2,10 | 2,10 | 2,10 |
| Gewürze | 0,60 | 0,60 | 0,60 | 0,60 |
| Apfelpulver | 0,00 | 3,70 | 0,00 | 0,00 |
| Apfelfaser | 0,00 | 0,00 | 3,70 | 0,00 |
| Apfelfruchtpulver | 0,00 | 0,00 | 0,00 | 3,70 |
| Wasser | 7,20 | 7,20 | 7,20 | 7,20 |

Die Herstellung der Referenz-BBQ-Sauce hat folgende Schritte:
- Mischen aller getrockneten Zutaten (Salz und Gewürze) in einem ersten Gefäß
- Mischen der restlichen Zutaten (Paprikapüree, Zwiebeln, heller Sirup, Apfelpüree, Wasser) in einem zweiten Gefäß
- Einrühren des Inhalts des ersten Gefäßes in den Inhalt des zweiten Gefäßes
- Erhitzen auf 95°C
- Mischen mit Stabmixer für 40 Sekunden
- Abkühlen auf 40°C unter Rühren
- Abfüllen

Die Herstellung der BBQ-Saucen mit den Apfel-basierten Pulvern hat folgende Schritte:
- Mischen aller getrockneten Zutaten (Salz, Gewürze und Pulvervariante) in ein erstes Gefäß
- Mischen der restlichen Zutaten (Paprikapüree, Zwiebeln, heller Sirup, Apfelpüree, Wasser) in ein zweites Gefäß
- Einrühren des Inhalts des ersten Gefäßes in den Inhalt des zweiten Gefäßes
- Erhitzen auf 95°C
- Mischen mit Stabmixer für 40 Sekunden
- Abkühlen auf 40 °C unter Rühren
- Abfüllen

Die Ergebnisse der Viskositätsmessungen sind in der folgenden Tabelle 5 wiedergegeben.

| | Referenz | Apfelpulver | Apfelfaser | Apfelfruchtpulver |
|---|---|---|---|---|
| Viskosität in mPas | 296 | 439 | 1349 | 1559 |

Die Viskosität der BBQ-Sauce mit dem erfindungsgemäßen Apfelfruchtpulver ist damit 3,6fach höher als die Viskosität, welche durch Zusatz des Apfelpulvers erzielt wurde, und 1,16fach höher als die Viskosität, welche durch Zusatz der Apfelfasern erzielt wurde.

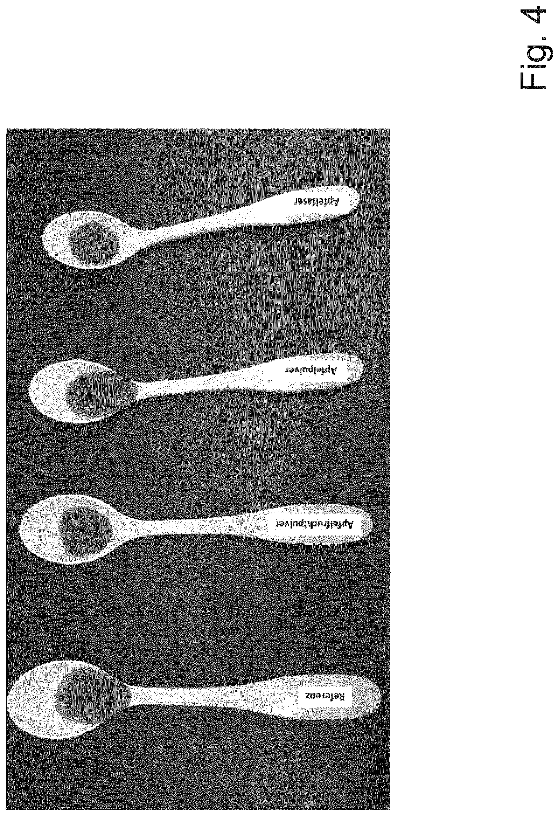

In Figur 4 sind fotografische Aufnahmen der oben beschriebenen BBQ-Saucen gezeigt. Im Vergleich der Proben ist mit bloßem Auge die hohe Festigkeit der Sauce mit dem erfindungsgemäßen Apfelfruchtpulver im Vergleich zur Sauce allein mit Rübensirup (Referenz) und mit Apfelpulver zu erkennen.

### Ausführungsbeispiel "Erdbeerfruchtzubereitung 1"

Die Rezeptur der "Erdbeerfruchtzubereitung 1" mit der Variation zwischen Zucker (Referenz), Apfelpulver, Apfelfaser und erfindungsgemäßem Apfelfruchtpulver ist in der folgenden Tabelle 6 wiedergegeben. Alle Angaben sind in g (Gramm).

| | Referenz | Apfelpulver | Apfelfaser | Apfelfruchtpulver |
|---|---|---|---|---|
| Erdbeerpüree (7,65 °Bx.; 0,9 % Säure) | 800 | 800 | 800 | 800 |
| Erdbeersaft-Konzentrat (66,3 °Bx.; 6,5 % Säure) | 17 | 17 | 17 | 17 |
| Zitronensaft-Konzentrat (58,0 °Bx.; 39,2 % Säure) | 4 | 4 | 4 | 4 |
| Zucker, kristallin | 259 | 219 | 219 | 219 |
| Apfelpulver | 0 | 40 | 0 | 0 |
| Apfelfaser | 0 | 0 | 40 | 0 |
| Apfelfruchtpulver | 0 | 0 | 0 | 40 |
| Wasser | 17 | 17 | 17 | 17 |

Die Herstellung der Referenz-"Erdbeerfruchtzubereitung 1" hat folgende Schritte:
- Mischen von Wasser, Zitronensaft-Konzentrat und Erdbeerpüree in einem Gefäß
- Erhitzen auf 95°C
- Hinzufügen des Zuckers
- Eindampfen auf Zielbrix (35°Brix)
- Hinzufügen des Erdbeersaft-Konzentrats
- Abkühlen auf 40 °C unter Rühren
- Abfüllen

Die Herstellung der "Erdbeerfruchtzubereitungen 1" mit den Apfel-basierten Pulvern hat folgende Schritte:
- Mischen von Wasser, Zitronensaft-Konzentrat, Erdbeerpüree und Pulvervariante in einem Gefäß
- Erhitzen auf 95 °C
- Hinzufügen des Zuckers
- Eindampfen auf Zielbrix (35° Brix)
- Hinzufügen des Erdbeersaft-Konzentrats
- Abkühlen auf 40°C unter Rühren
- Abfüllen

Die Ergebnisse der Viskositätsmessungen sind in der folgenden Tabelle 7 wiedergegeben.

| | Referenz | Apfelpulver | Apfelfaser | Apfelfruchtpulver |
|---|---|---|---|---|
| Viskosität in mPas | 1686 | 7028 | 2845 | 10190 |

Die Viskosität der "Erdbeerfruchtzubereitung 1" mit dem erfindungsgemäßen Apfelfruchtpulver ist damit 1,45fach höher als die Viskosität, welche durch Zusatz des Apfelpulvers erzielt wurde, und 3,58fach höher als die Viskosität, welche durch Zusatz der Apfelfasern erzielt wurde.

### Ausführungsbeispiel "Erdbeerfruchtzubereitung 2"

Die Rezeptur der "Erdbeerfruchtzubereitung 2" mit der Variation zwischen Zucker (Referenz), Apfelpulver, Apfelfaser und erfindungsgemäßem Apfelfruchtpulver ist in der folgenden Tabelle 8 wiedergegeben. Alle Angaben sind in g (Gramm).

| | Referenz | Apfelpulver | Apfelfaser | Apfelfruchtpulver |
|---|---|---|---|---|
| Erdbeerpüree (7,65 °Bx.; 0,9 % Säure) | 400 | 400 | 400 | 400 |
| Zucker, kristallin | 315 | 277 | 277 | 277 |
| Magermilchpulver (35 % Protein) | 5,70 | 5,7 | 5,7 | 5,7 |
| Apfelpulver | 0 | 38 | 0 | 0 |
| Apfelfaser | 0 | 0 | 38 | 0 |
| Apfelfruchtpulver | 0 | 0 | 0 | 38 |
| Wasser | 280 | 280 | 280 | 280 |

Die Herstellung der Referenz-"Erdbeerfruchtzubereitung 2" hat folgende Schritte:
- Mischen von 36 % des Erdbeerpürees und 78 % des Wassers in einem ersten Gefäß
- Erhitzen auf 95°C
- Hinzufügen des restlichen Erdbeerpürees und des gesamten Zuckers
- Mischen des restlichen Wassers und des Magermilchpulvers in einem zweiten Gefäß
- Einrühren des Inhalts des zweiten Gefäßes in das erste Gefäß
- Abkühlen auf 40°C unter Rühren
- Abfüllen

Die Herstellung der "Erdbeerfruchtzubereitungen 2" mit den Apfel-basierten Pulvern hat folgende Schritte:
- Mischen von 36 % des Erdbeerpürees und 78 % des Wassers in einem ersten Gefäß
- Erhitzen auf 95°C
- Hinzufügen der Pulvervariante unter Rühren
- Hinzufügen des restlichen Erdbeerpürees und des gesamten Zuckers
- Mischen des restlichen Wassers und des Magermilchpulvers in einem zweiten Gefäß
- Einrühren des Inhalts des zweiten Gefäßes in das erste Gefäß
- Abkühlen auf 40 °C unter Rühren
- Abfüllen

Die Ergebnisse der Viskositätsmessungen sind in der folgenden Tabelle 9 wiedergegeben.

| | Referenz | Apfelpulver | Apfelfaser | Apfelfruchtpulver |
|---|---|---|---|---|
| Viskosität in mPas | 402 | 1229 | 954 | 5660 |

Die Viskosität der "Erdbeerfruchtzubereitung 2" mit dem erfindungsgemäßen Apfelfruchtpulver ist damit 4,6fach höher als die Viskosität, welche durch Zusatz des Apfelpulvers erzielt wurde, und 5,9fach höher als die Viskosität, welche durch Zusatz der Apfelfasern erzielt wurde.

Für die "Erdbeerfruchtzubereitung 2" wurde die Backstabilität mit folgender Methode bewertet:
1. Platzieren eines Metallrings (9 mm Höhe, 34 mm Durchmesser) auf einem mit Backpapier bedeckten Backblech.
2. Einfüllen von 10 g Probe in den Metallring.
3. Entfernen des Metallrings.
4. Backen der Probe bei 200 °C Ober-/Unterhitze für 8 Minuten.
5. Beurteilung des "Zerlaufens" der Probe.

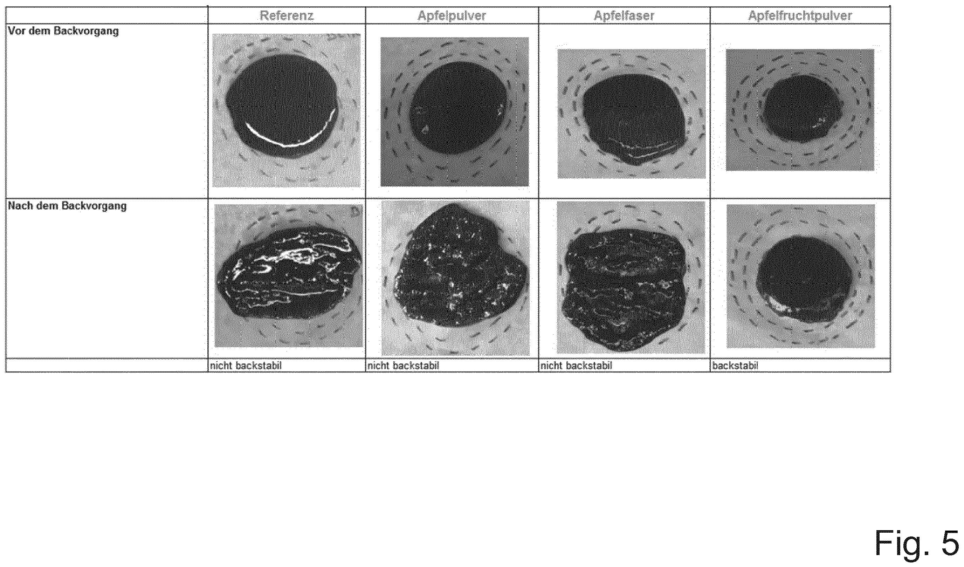

In Figur 5 sind die fotografische Auswertung der Untersuchungen zur Backstabilität gezeigt. Alleine die Probe der "Erdbeerfruchtzubereitung 2", die mit dem erfindungsgemäßen Apfelfruchtpulver hergestellt wurde, zeigt nahezu keine Veränderungen in ihrer räumlichen Ausdehnung nach dem Backvorgang im Vergleich zu vor dem Backvorgang.

Es ist dem Fachmann ersichtlich, dass die Erfindung nicht auf die vorstehend beschriebenen Beispiele beschränkt ist, sondern vielmehr in vielfältiger Weise variiert werden kann. Insbesondere können die Merkmale der einzeln dargestellten Beispiele auch miteinander kombiniert oder gegeneinander ausgetauscht werden.

## Patentansprüche

1. Fruchtprodukt
umfassend im Wesentlichen alle wasserunlöslichen Bestandteile einer Frucht oder einer Mischung aus Früchten außer deren nicht-essbaren Bestandteilen, insbesondere außer Schalen, Kernen und Stielen,
wobei das Fruchtprodukt ein "Kohlenhydrat zu Ballaststoff"-Verhältnis im Bereich von 0,6 bis 4,7, bevorzugt im Bereich von 0,6 bis 3,5, besonders bevorzugt im Bereich von 0,6 bis 2,5 hat.

2. Fruchtprodukt nach Anspruch 1,
**dadurch gekennzeichnet, dass**
das Fruchtprodukt ein Verhältnis von löslichen Ballaststoffen zu unlöslichen Ballaststoffen im Bereich von 0,15 bis 1,5, bevorzugt im Bereich von 0,25 bis 1,1, besonders bevorzugt im Bereich von 0,35 bis 1,0 auf.

3. Fruchtprodukt nach Anspruch 1 oder 2,
**dadurch gekennzeichnet, dass**
das Fruchtprodukt ein Apfelfruchtprodukt ist und im Vergleich mit einem Apfelpulver hergestellt aus getrockneten ungeschälten oder geschälten Äpfeln bei gleicher eingesetzter Menge in einem Endprodukt zu einer um das 1,45-fache bis zu einer um das 4,6-fache erhöhten Viskosität des Endproduktes führt.

4. Fruchtprodukt nach einem der voranstehenden Ansprüche,
**dadurch gekennzeichnet, dass**
das Fruchtprodukt ein Apfelfruchtprodukt ist und im Vergleich zu Apfelfasern hergestellt aus getrocknetem Apfeltrester bei gleicher eingesetzter Menge in einem Endprodukt zu einer um das 1,16-fache bis zu einer um das 6-fache erhöhten Viskosität des Endproduktes führt.

5. Fruchtprodukt nach einem der voranstehenden Ansprüche,
**dadurch gekennzeichnet, dass**
das Fruchtprodukt ein Apfelfruchtprodukt ist und
dass eine Probe von 10 g eines das Apfelfruchtprodukt enthaltende Endprodukt nach 8 Minuten Backen bei 200°C Ober-/Unterhitze in ihrer räumlichen Ausdehnung im Wesentlichen unverändert ist.

6. Verwendung eines Fruchtproduktes nach einem der voranstehenden Ansprüche
als texturgebende Komponente eines Lebensmittels, welches insbesondere aus der Gruppe ausgewählt ist, die Fruchtzubereitungen, Fruchtaufstriche und Saucen, Getränke, Backwaren, Eiszubereitungen und Süßwaren umfasst.
